# EUROPEAN PATENT APPLICATION

(11) **EP 4 459 743 A1**
(43) Date of publication of application: **06.11.2024**
(21) Application number: 24164582.9
(22) Date of filing: 19.03.2024
(51) Int. Cl.: H01M 10/613, H01M 10/643, H01M 10/6557, H01M 10/6567, H01M 50/213, H01M 50/264, H01M 50/291, H01M 50/35, H01M 50/503, H01M 50/507, H01M 50/516, H01M 50/55, H01M 50/559, H01M 10/625, H01M 50/249, H01M 50/262, H01M 50/51

(54) **BATTERY PACK**

(30) Priority: 21.03.2023 KR 20230036724
(71) Applicant: Samsung SDI Co., Ltd., Yongin-si, Gyeonggi-do 17084 (KR)
(72) Inventor: KIM, Junseop, 17084 Yongin-si (KR); JI, Sejin, 17084 Yongin-si (KR); WOO, Minuk, 17084 Yongin-si (KR); BAE, Kwangsoo, 17084 Yongin-si (KR); SEOL, Jihwan, 17084 Yongin-si (KR); BAE, Seongchan, 17084 Yongin-si (KR)
(74) Representative: Marks & Clerk LLP

(57) **Abstract**

A battery pack includes: a plurality of battery cells in a plurality of columns, the battery cells in each of the columns being located along a column direction, and the battery cells in the columns adjacent to each other being located along a zigzag pattern in a row direction while alternately shifted forward and rearward in the column direction; a plurality of cooling pieces, each of the cooling pieces being located between the battery cells in the columns adjacent to each other, and extending in a meander shape along an outer circumference of the battery cells in the columns adjacent to each other; and a bus bar on a terminal surface of the battery cells to electrically connect the battery cells to each other in rows adjacent to each other, the terminal surface being a surface on which different first and second electrodes are exposed.

## Description

### BACKGROUND

### 1. Field

Aspects of one or more embodiments of the present disclosure relate to a battery pack.

### 2. Description of the Related Art

In general, secondary batteries can be charged and discharged, unlike primary batteries that cannot be charged. Secondary batteries are used as energy sources for mobile devices, electric vehicles, hybrid vehicles, electric bicycles, uninterruptible power supplies, and the like. Also, depending on a kind of the external devices to which the secondary batteries are applied, the secondary batteries may be used in the form of a single battery, or in the form of a module in which a plurality of batteries are connected and bundled together into a unit.

A small mobile device, such as a mobile phone, may operate for a certain period of time with only the output and capacity of a single battery. However, when a longer period of time and a higher power are desired, such as in the case of an electric vehicle or a hybrid vehicle that consumes a lot of power, the module kind including a plurality of batteries may be desired due to the higher output and capacity thereof. Also, the output voltage or output current may be increased according to the number of batteries embedded therein.

The above information disclosed in this Background section is for enhancement of understanding of the background of the present disclosure, and therefore, it may contain information that does not constitute prior art.

### SUMMARY

One or more embodiments of the present disclosure are directed to a battery pack that may prevent or substantially prevent leakage of a coolant while securing heat dissipation performance due to a structure in which a cooling piece containing an insulating fluid is located between battery cells.

One or more embodiments of the present disclosure are directed to a battery pack that may be easily connected to a chiller, on which the battery pack is to be mounted, of a vehicle by including first and second heat conductive surfaces formed by bending ends (e.g., both ends or opposite ends) of a cooling piece.

One or more embodiments of the present disclosure are directed to a battery pack that may minimize or reduce energy density loss by including a structure in which mounting portions and first and second terminals are arranged in spaces between battery cells.

One or more embodiments of the present disclosure are directed to a battery pack that may increase the allowable current capacity and minimize or reduce loss due to a resistance.

One or more embodiments of the present disclosure are directed to a battery pack that includes a bus bar having different thicknesses for different regions to improve the welding quality of the bus bar.

One or more embodiments of the present disclosure are directed to a battery pack that may facilitate a gas discharge when an ignition event occurs by including a structure of a venting portion formed on the lower surface of the battery pack.

However, the aspects and features of the present disclosure are not limited to those described above.

The above and additional aspects and features will be set forth, in part, in the description that follows, and in part, will be apparent from the description, or may be learned by practicing one or more of the presented embodiments of the present disclosure.

According to one or more embodiments of the present disclosure, a battery pack includes: a plurality of battery cells in a plurality of columns, the battery cells in each of the columns being located along a column direction, and the battery cells in the columns adjacent to each other being located along a zigzag pattern in a row direction while alternately shifted forward and rearward in the column direction; a plurality of cooling pieces, each of the cooling pieces being located between the battery cells in the columns adjacent to each other, and extending in a meander shape along an outer circumference of the battery cells in the columns adjacent to each other; and a bus bar on a terminal surface of the battery cells to electrically connect the battery cells to each other in rows adjacent to each other, the terminal surface being a surface on which different first and second electrodes are exposed.

In an embodiment, extra spaces may be located at a position behind the battery cells in a column shifted forward, and at a position in front of the battery cells in a column shifted rearward from among the battery cells in the columns adjacent to each other. The extra spaces may be located in at least one position from among mounting portions of first and second holders configured to accommodate the plurality of battery cells, or first and second terminals configured to draw electrical outputs of the plurality of battery cells.

In an embodiment, each of the cooling pieces may include first and second heat conductive surfaces at opposite ends, respectively, that may be bent in a direction crossing the column direction outside the plurality of battery cells.

In an embodiment, the bus bar may include: first portions connected to the first electrodes of the battery cells of a first group; second portions connected to the second electrodes of the battery cells of a second group adjacent to the first group in the row direction; and connection portions connecting the first and second portions to each other.

In an embodiment, the bus bar may include a plurality of bus bar units, and the plurality of bus bar units may be located in a zigzag pattern along the row direction.

In an embodiment, a thickness of at least one of the first portions, the second portions, or the connection portions may be different from thicknesses of the others.

In an embodiment, the thicknesses of the first and second portions may be less than the thickness of the connection portions.

In an embodiment, the first portions may be welded and coupled to the first electrodes of the battery cells of the first group, and the second portions may be welded and coupled to the second electrodes of the battery cells of the second group.

In an embodiment, the thicknesses of each of the first and second portions may be 0.5 mm or less, and the thickness of the connection portions may be 0.8 mm or more.

In an embodiment, the battery pack may further include a venting portion on a bottom surface of the battery pack, the venting portion having a pillar structure protruding in a vertical direction from a lower surface of the battery cells.

In an embodiment, the cooling pieces may be configured to accommodate an insulating fluid therein.

In an embodiment, the battery pack may further include first and second holders configured to accommodate the plurality of battery cells.

In an embodiment, the first and second holders may include a plurality of hooks on outer surfaces thereof.

The above and other aspects and features of the present disclosure will become more apparent from the following detailed description, the drawings, and the claims and their equivalents.

At least some of the above and other features of the invention are set out in the claims.

### BRIEF DESCRIPTION OF THE DRAWINGS

The above and other aspects and features of the present disclosure will be more clearly understood from the following detailed description of the illustrative, non-limiting embodiments with reference to the accompanying drawings, in which:
FIG. 1 is a perspective view showing a battery pack according to one or more embodiments;
FIG. 2 is an exploded perspective view of the battery pack of FIG. 1;
FIG. 3A is a reversed perspective view of the battery pack of FIG. 1;
FIG. 3B is a plan view of the battery pack of FIG. 1 when viewed in the direction A;
FIG. 4 is a view of the battery pack of FIG. 1 when viewed in the direction B;
FIG. 5A is a plan view of the battery pack of FIG. 1 when viewed in the direction C;
FIG. 5B is a plan view of the battery pack shown in a state in which a top cover and a bus bar are removed from the view of FIG. 5A;
FIG. 6A is a view showing an arrangement configuration of a plurality of battery cells and cooling pieces according to one or more embodiments;
FIG. 6B is a view showing a shape of a cooling piece according to one or more embodiments;
FIG. 7A is a view showing a portion of a plurality of bus bar units according to one or more embodiments;
FIG. 7B is a view in which the plurality of bus bar units of FIG. 7A are viewed from another angle;
FIG. 8 is a view showing first and second electrodes of a battery cell according to one or more embodiments;
FIG. 9A is a view showing a shape of a bus bar according to one or more embodiments; and
FIG. 9B is a cross-sectional view taken along the line A-A' of FIG. 9A, and shows a state in which the battery cells are coupled to the bus bar.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

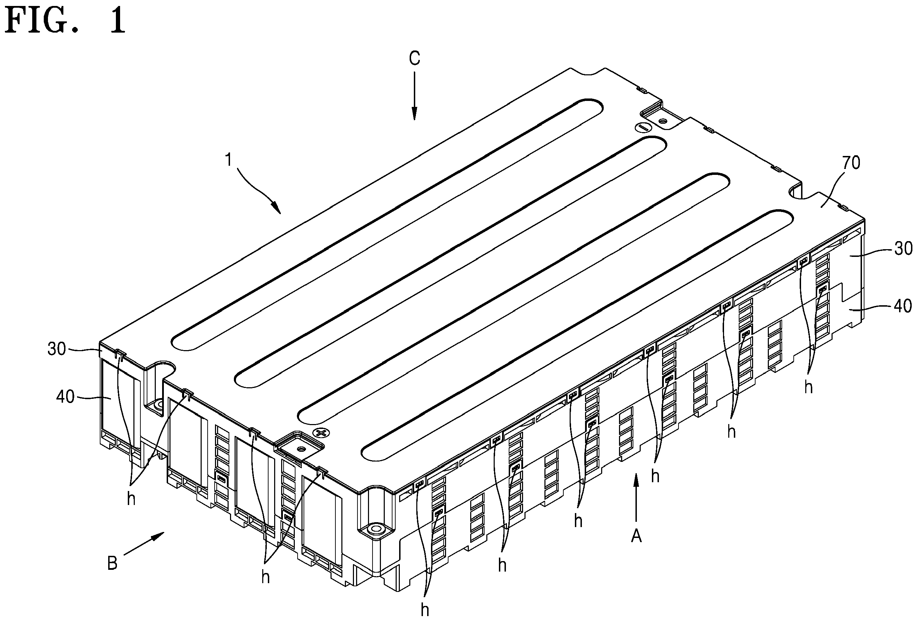

A battery pack according to one or more embodiments of the present disclosure will first be described with reference to FIGS. 1, 2, and 8.

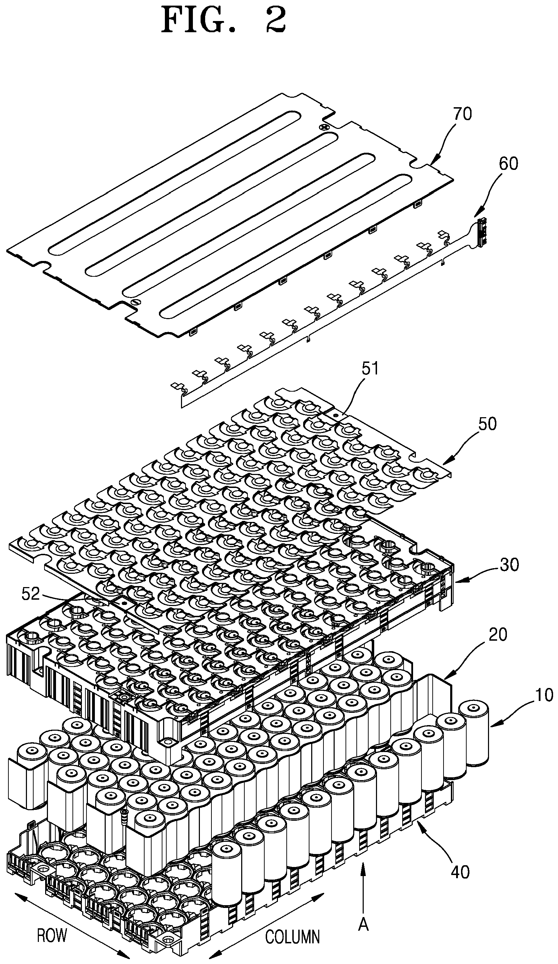

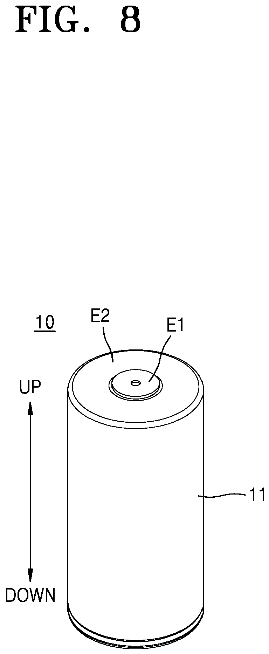

FIG. 1 is a perspective view showing a battery pack 1 according to one or more embodiments. FIG. 2 is an exploded perspective view of the battery pack 1 of FIG. 1. FIG. 8 is a view showing first and second electrodes E1 and E2 of a battery cell according to one or more embodiments.

Referring to FIGS. 1, 2, and 8, the battery pack 1 may include a plurality of battery cells 10. Battery cells 10 are shown as being cylibdrical. The plurality of battery cells 10 may be arranged in a plurality of columns of the battery cells 10. The battery cells 10 in each of the columns are arranged along a column direction. Also, the battery cells 10 in the columns adjacent to each other are arranged in a zigzag pattern along a row direction, while alternately shifting forward and rearward in the column direction. In an embodiment, as shown in the figures the axis of each battery extends in a direction perpendicular to the column and row directions.

The battery pack 1 includes a plurality of cooling pieces 20, each of which is located between the battery cells in corresponding columns adjacent to each other, and extends in a meander shape along an outer circumference of the battery cells in the corresponding columns adjacent to each other. The meander shape may follow the contours of the battery cells in the column direction in view of the zigzag pattern in the row direction, and may be a substantially regular wave shape along at least a portion of the cooling piece. In other words the meander shape may be determined by the arrangement of the plurality of battery cells.

A bus bar 50 is provided on a terminal surface of each of the battery cells 10, on which different first and second electrodes E1 and E2 are formed together, so that the battery cells 10 in rows adjacent to each other are electrically connected to each other.

Each of the battery cells 10 may be a cylindrical battery cell including the first electrode E1 formed in the middle of an upper terminal and protruding upward, the second electrode E2 defining a circumferential surface surrounding (e.g., around a periphery of) the first electrode E1, and an outer circumferential surface 11 having a cylindrical shape. As used herein, a height direction may refer to the length that represents the longest dimension of the battery cell 10. For example, the height direction of the battery pack 1 may be the same as the height direction of the battery cell 10. A side at a high height may represent the upper side and a side at a low height may represent the lower side.

According to one or more embodiments of the present disclosure, the first and second electrodes E1 and E2 on the same side of the battery cell 10 in the height direction may include electrodes having different polarities from each other through which charging/discharging currents are input or output.

For example, the electrodes having different polarities from each other, through which the charging/discharging currents are input or output, are all formed at one end selected from among first and second ends of the battery cell 10 that are opposite to each other in the height direction. For example, different portions on one end of the battery cell 10 may have the positive polarity and the negative polarity, respectively. However, the present disclosure is not limited thereto, and the battery cell 10 may have any suitable shape, such as a prismatic shape. The battery pack 1 according to one or more embodiments may be mounted on a means of transportation, such as a vehicle, to provide a movement power. Therefore, the battery pack 1 may include a battery cell 10 having a large capacity, or may include a plurality of battery cells 10 in order to provide the desired output performance.

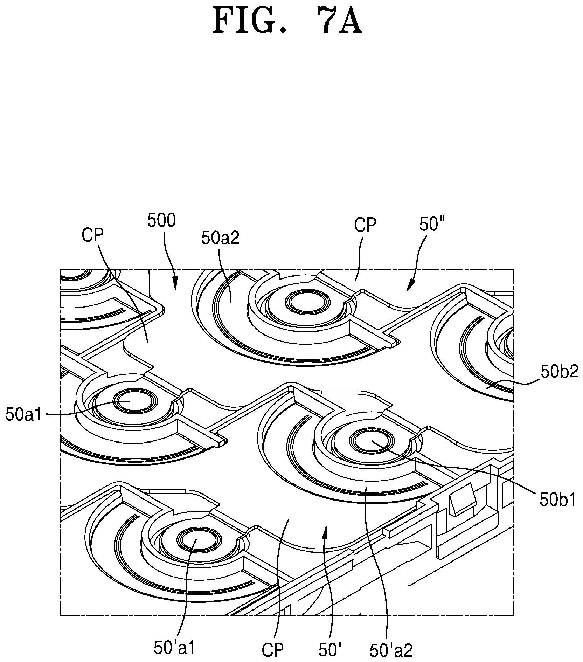

Referring to FIG. 2, the plurality of battery cells 10 for the battery pack 1 may be electrically connected to each other through the bus bar 50. In one or more embodiments of the present disclosure, the bus bar 50 may include a plurality of bus bar units 50 that electrically connect the battery cells 10 in adjacent rows to each other. For example, as shown in FIG. 7A, the bus bar 50 may include a first portion 50a1 connected to the first electrode E1 of each of the battery cells 10 in the adjacent rows, a second portion 50a2 connected to the second electrode E2 of each of the battery cells 10 in the adjacent rows, and a connection portion CP connecting the first and second portions 50a1 and 50a2 to each other.

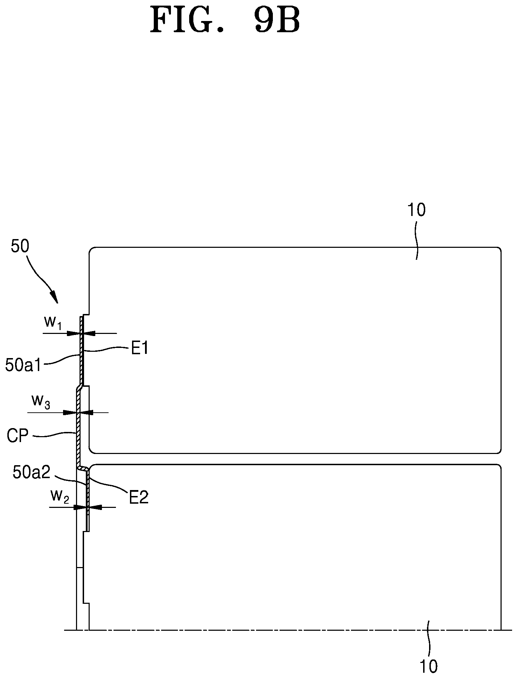

According to one or more embodiments of the present disclosure, the bus bar 50 may electrically connect the battery cells 10 to each other in the rows adjacent to each other (e.g., the adjacent rows). For example, as shown in FIG. 9B, the first portion 50a1 of the bus bar 50 may protrude toward the first electrode E1 of the battery cell 10, and the first portion 50a1 of the bus bar 50 may be welded and coupled to the first electrode E1 of the battery cell 10. The second portion 50a2 of the bus bar 50 may protrude toward the second electrode E2 of the battery cell 10 (e.g., the adjacent battery cell 10), and the second portion 50a2 of the bus bar 50 may be welded and coupled to the second electrode E2 of the battery cell 10 (e.g., the adjacent battery cell 10).

According to one or more embodiments, first and second holders 30 and 40 may accommodate the plurality of battery cells 10. The first holder 30 may hold upper sides of the plurality of battery cells 10. The second holder 40 may hold lower sides of the plurality of battery cells 10. The first and second holders 30 and 40 may accommodate the plurality of battery cells 10 from above and below, respectively, and protect the battery cells 10 accommodated therein from the outside.

For example, the battery pack 1 according to one or more embodiments of the present disclosure may be mounted on a means of transportation, such as the vehicle, and thus, it may be desirable for the battery pack 1 to have an appropriate strength against a collision with the means of transportation (e.g., when the means of transportation is in an accident and the like). According to one or more embodiments of the present disclosure, the first and second holders 30 and 40 may include a metal material having a suitable ductility and an appropriate strength, so as to not be broken or damaged by an external impact. For example, a brittle material, such as plastic or a synthetic resin, may be broken or damaged by an external impact, and thus, the first and second holders 30 and 40 according to one or more embodiments may include the metal material, for example, such as aluminum. Also, the first and second holders 30 and 40 may function as heat sinks for a cooling fluid that cools the battery cells 10, in addition to providing a space for accommodating the battery cells 10 therein, and thus, the first and second holders 30 and 40 may include a metal material having a suitable thermal conductivity (e.g., a high or excellent thermal conductivity), such as aluminum.

The bus bar 50 may be disposed on the upper sides of the plurality of battery cells 10, and may be coupled to the first and second electrodes E1 and E2 arranged on the upper terminal surfaces of the plurality of battery cells 10. The bus bar 50 may be located between the plurality of battery cells 10 and a top cover 70. A sensing flexible printed circuit 60 may be located between the top cover 70 and the plurality of battery cells 10.

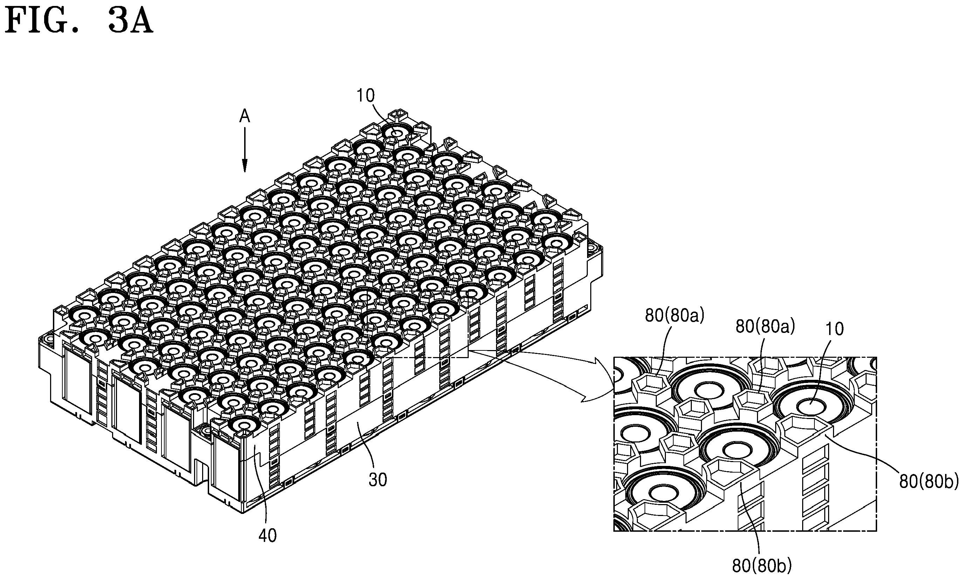

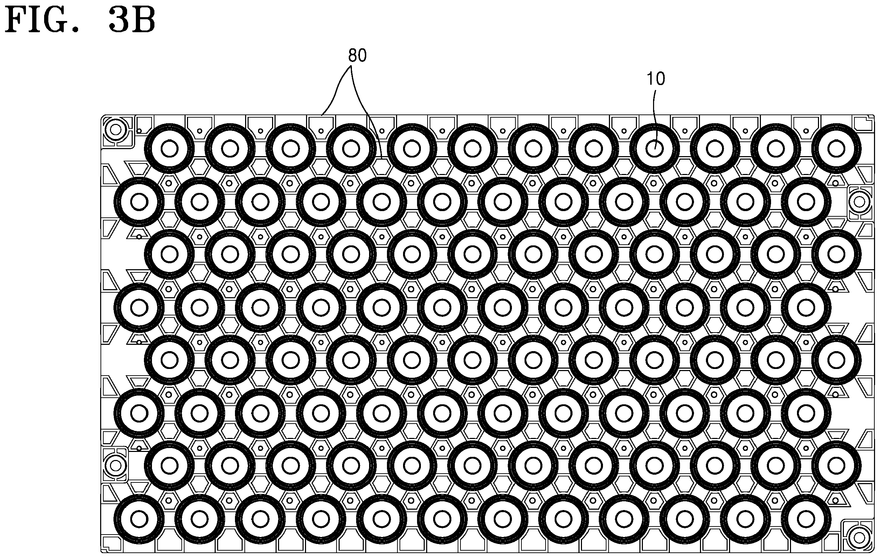

FIG. 3A is a reversed perspective view of the battery pack of FIG. 1. For example, FIG. 3A is a view in which the battery pack 1 of FIG. 1 is viewed upside down. FIG. 3B is a plan view of the battery pack 1 of FIG. 1 when viewed in the direction A.

Referring to FIGS. 3A and 3B, the battery pack 1 according to one or more embodiments may include venting portions 80 formed on a bottom surface (e.g., the lower surface) of the battery pack 1. For example, each of the venting portions 80 may have a pillar structure that protrudes in the vertical direction (e.g., the A direction) from the lower surface of the battery cell 10.

For example, a first venting portion 80a may be provided between three adjacent battery cells 10, and a second venting portion 80b may be provided between the second holder 40 and two adjacent battery cells 10 adjacent to the second holder 40. Both the first venting portion 80a and the second venting portion 80b may have a polygonal prism shape. The first venting portion 80a may have a hexagonal prism shape, and the second venting portion 80b may have an irregular hexagonal prism shape that includes a portion connected to the second holder 40. Each of the first and second venting portions 80a and 80b has a structure protruding in a pillar shape from the lower surface of the battery cell 10, and thus, spaces are formed between the lower surfaces of the battery cells 10 and the outermost surface of the battery pack 1. For example, if an event occurs, such as an ignition, an explosion, or a fire of the battery pack 1, it may be possible to easily eject gas generated in the lower spaces of the battery pack 1 to the outside of the battery pack 1 through the venting portions 80a and 80b.

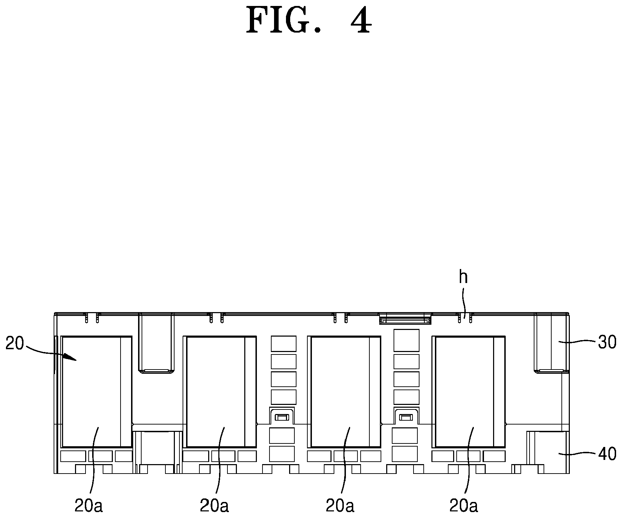

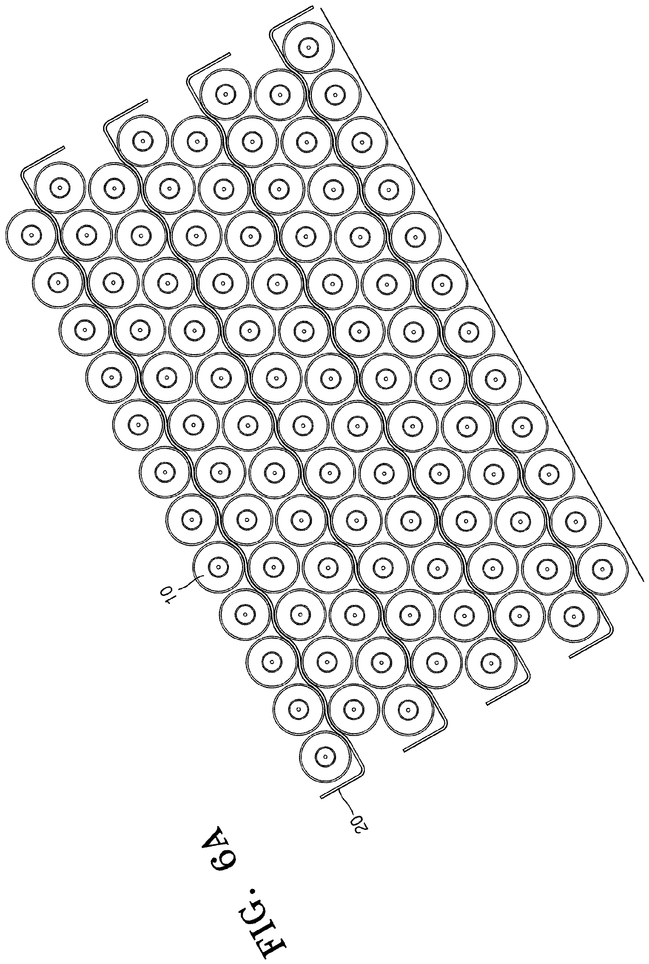

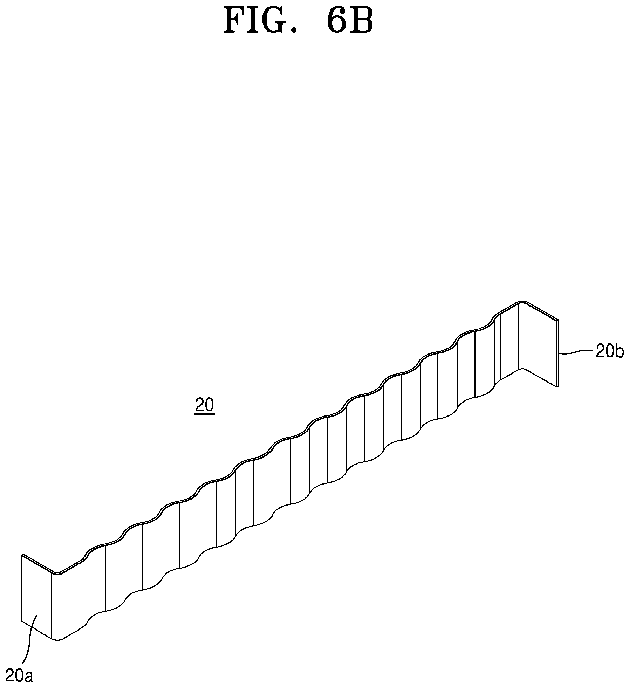

FIG. 4 is a view of the battery pack 1 of FIG. 1 when viewed in the direction B. FIG. 6A is a view showing an arrangement configuration of the plurality of battery cells 10 and the cooling pieces 20 according to one or more embodiments. FIG. 6B is a view showing a shape of each of the cooling pieces 20 according to one or more embodiments.

According to one or more embodiments, referring to FIGS. 4, 6A, and 6B, the cooling pieces 20 may be located between the battery cells 10 in the columns adjacent to each other, and extends in a meander shape along the outer circumference of the battery cells 10 in the columns adjacent to each other. First and second heat conductive surfaces 20a and 20b may be formed at one end and another end (e.g., an opposite end) of the cooling piece 20, respectively. The first and second heat conductive surfaces 20a and 20b may be bent, in a direction crossing the column direction of the plurality of battery cells 10, on the outside of the plurality of battery cells 10, for example, in regions formed by the outer surfaces of the first and second holders 30 and 40.

For example, as shown in FIG. 4, the first and second heat conductive surfaces 20a and 20b may be bent at 90 degrees, and thus, may be in contact with the outer surfaces of the first and second holders 30 and 40. Consequently, both ends (e.g., opposite ends) of the cooling piece 20 in contact with the plurality of battery cells 10 may be not located in the inner space formed by the first and second holders 30 and 40 that accommodate the plurality of battery cells 10, and may be located in the outer space of the first and second holders 30 and 40. Therefore, it may be possible to more easily connect the first and second heat conductive surfaces 20a and 20b to a chiller of a vehicle. For example, in a structure in which the first and second heat conductive surfaces 20a and 20b cover more than half of the outer surfaces of the first and second holders 30 and 40 on which the first and second heat conductive surfaces 20a and 20b are located, the area of the first and second heat conductive surfaces 20a and 20b exposed to the outside may exceed half of the area of the outer surfaces of the first and second holders 30 and 40. Therefore, it may be possible to more easily connect the first and second heat conductive surfaces 20a and 20b to the chiller of the vehicle.

According to one or more embodiments, an insulating fluid may be accommodated in the cooling pieces 20. The structure in which the insulating fluid is accommodated inside the cooling pieces 20 may increase the thermal conductivity of the cooling pieces 20, and thus, it may be possible to prevent or substantially prevent the cooling fluid from entering electric components of the battery pack 1 or leaking to the outside of the battery pack 1.

According to one or more embodiments, as shown in FIG. 1, a plurality of hooks h may be formed on the outside of the first and second holders 30 and 40. The plurality of hooks h may establish hook-coupling between the top cover 70 and the first holder 30, and may facilitate hook-coupling between the first holder 30 and the second holder 40.

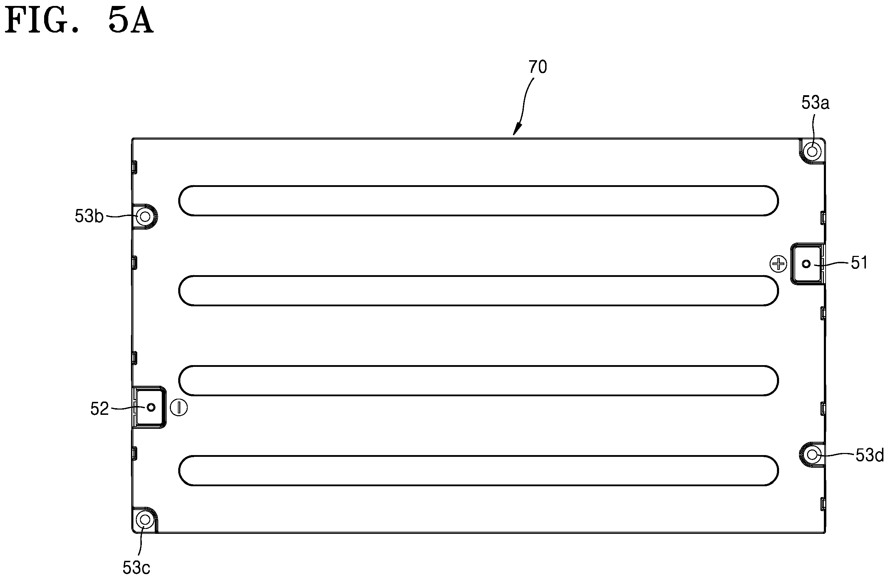

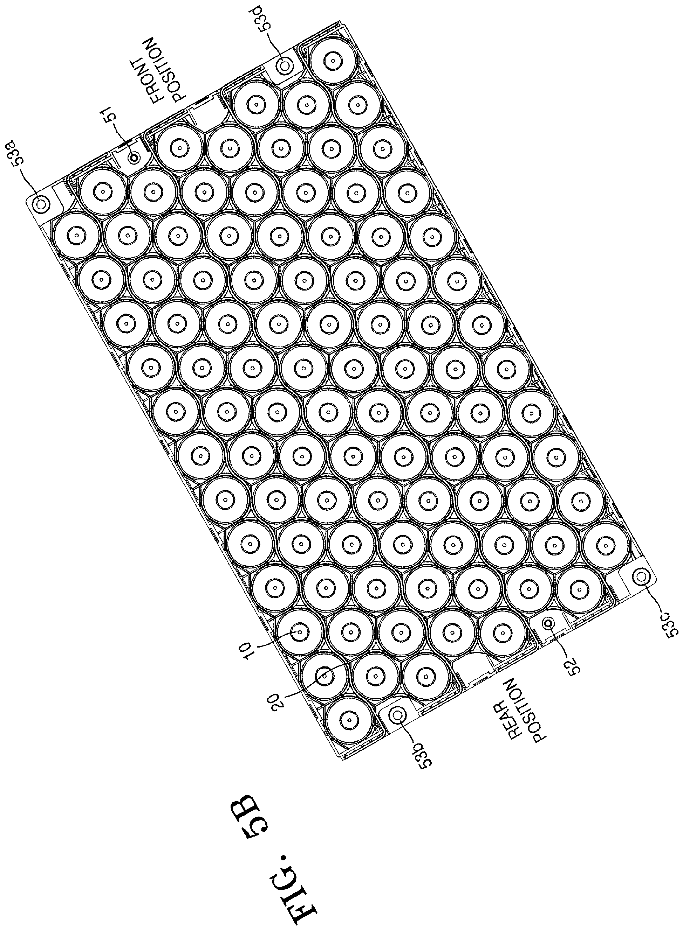

FIG. 5A is a plan view of the battery pack 1 of FIG. 1 when viewed in the direction C. FIG. 5B is a plan view of the battery pack 1 shown in a state in which the top cover 70 and the bus bar 50 are removed from the view of FIG. 5A.

Referring to FIGS. 5A and 5B, extra spaces may be formed at a position (e.g., the rear position) behind the battery cells 10 in a column shifted forward, and at a position (e.g., the front position) in front of the battery cells 10 in a column shifted rearward from among the battery cells 10 in the columns adjacent to each other. The extra spaces may be provided at positions of mounting portions 53a, 53b, 53c, and 53d of the first and second holders 30 and 40 for accommodating the plurality of battery cells 10, and at first and second terminals 51 and 52 for drawing electrical outputs of the plurality of battery cells 10.

For example, because the positions of the mounting portions 53a, 53b, 53c, and 53d and the first and second terminals 51 and 52 are at the extra spaces between the plurality of battery cells 10 that are cylindrical battery cells, the utilization of the space may be improved, and the energy density of the battery pack 1 may be increased.

According to one or more embodiments, two mounting portions 53a and 53d and the first terminal 51 between the two mounting portions 53a and 53d may be arranged on one side of the first and second holders 30 and 40. Similarly, two mounting portions 53b and 53c and the second terminal 52 between the two mounting portions 53b and 53c may be arranged on another side (e.g., an opposite side) of the first and second holders 30 and 40.

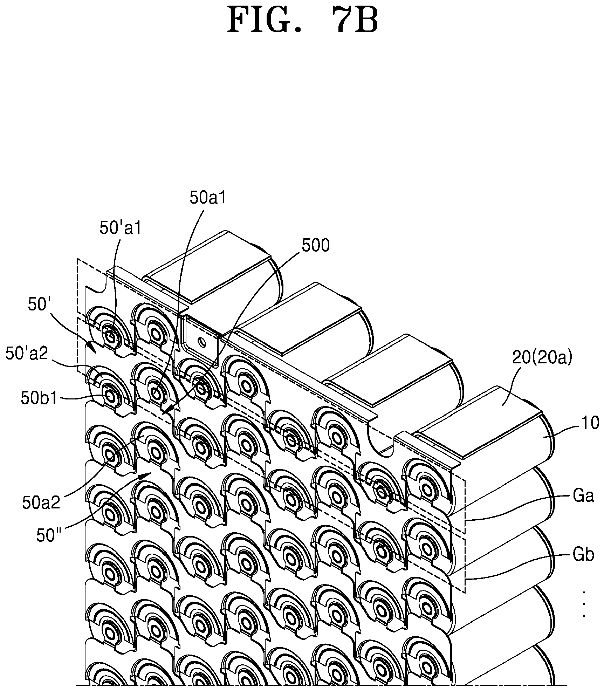

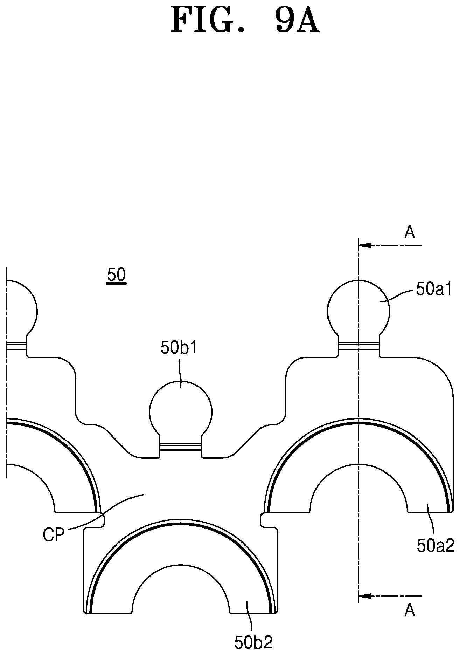

FIG. 7A is a view showing a portion of a plurality of bus bar units 50, 50', and 50" according to one or more embodiments. FIG. 7B is a view in which the plurality of bus bar units 50, 50', and 50" of FIG. 7A are viewed from another angle. FIG. 8 is a view showing the first and second electrodes E1 and E2 of the battery cell 10 according to one or more embodiments. FIG. 9A is a view showing the shape of the bus bar 50 according to one or more embodiments. FIG. 9B is a cross-sectional view taken along the line A-A' of FIG. 9A, and shows a state in which the battery cells 10 are coupled to the bus bar 50.

According to one or more embodiments, the bus bar 50 may include the plurality of bus bar units 500, 50', and 50". For example, the longitudinal direction of the plurality of bus bar units 500, 50', and 50" is in the row direction, and the bus bar units 500, 50', and 50" may connect the first electrodes E1 of the battery cells 10 in a first group Ga, which are adjacent to each other in the row direction, to the second electrodes E2 of the battery cells 10 in a second group Gb adjacent to the first group Ga (e.g., in the column direction).

Consequently, the plurality of bus bar units 500, 50', and 50" may connect the plurality of battery cells 10 arranged along the column direction to each other. For example, the plurality of bus bar units 500, 50', and 50" may be arranged in a zigzag pattern in the row direction. FIG. 7A illustrates only three bus bar units 500, 50', and 50", but the present disclosure is not limited thereto, and the number of bus bar units may vary as needed or desired.

For example, the bus bar unit 500 may include the first portion 50a1 coupled to the first electrode E1 of one battery cell 10 in one column of the battery cells 10, and the second portion 50a2 coupled to the second electrode E2 of a battery cell 10 adjacent to the one battery cell 10 in the same column.

For example, the bus bar unit 50' may include a first portion 50'a1 coupled to the first electrode E1 of one battery cell 10 in one column of the battery cells 10, and a second portion 50'a2 coupled to the second electrode E2 of a battery cell 10 adjacent to the one battery cell 10 in the same column. For example, the second portion 50'a2 of the bus bar unit 50' may correspond to a first portion 50b1, of the bus bar unit 500 adjacent to the bus bar unit 50', which is coupled to the first electrode E1 of another battery cell 10 coupled to the second portion 50'a2. For example, the first portion 50b1 has a circular shape corresponding to the shape of the first electrode E1, and the second portion 50'a2 has an arc shape corresponding to the shape of the second electrode E2. The first portion 50b1 and the second portion 50'a2 may be arranged such that the first portion 50b1 is inserted into a space in the arc shape of the second portion 50'a2.

As such, one battery cell 10 from among the battery cells 10 in one column and one battery cell 10 from among the battery cells 10 in another column adjacent to the one column can be connected to each other while being offset from each other.

For example, it has been described that the bus bar 50 includes the plurality of bus bar units, and the plurality of first and second portions are arranged to be offset from each other in the bus bar. This configuration may represent the entire configuration, and thus, other bus bars and first and second portions of the bus bars in regions other than the above-described region are also arranged in the same structure and pattern. However, for convenience of description, the bus bar 50 and the first and second portions 50a1 and 50a2 may be defined by the description of the above reference numerals.

According to one or more embodiments, the thickness of at least one of the first portion 50a1, the second portion 50a2, or the connection portion CP of the bus bar 50 may be different from the thicknesses of the others. For example, the thicknesses w₁ and w₂ of the first and second portions 50a1 and 50a2 may be less than the thickness w₃ of the connection portion CP. For example, the first portion 50a1 may be welded and coupled to the first electrode E1 of the battery cell 10, and the second portion 50a2 may be welded and coupled to the second electrode E2 of the battery cell 10 (e.g., the adjacent battery cell).

The bus bar 50 may have a suitable thickness (e.g., a certain thickness) in order to satisfy current capacity as a current collector. However, if the thickness of the bus bar 50 is too large, a welding quality between the bus bar 50 and the battery cells 10 may be deteriorated.

According to one or more embodiments, the thickness of the bus bar 50 in a region in which the bus bar 50 is welded to the electrodes of the battery cells 10 is less than the thickness of the bus bar 50 in a region that is not welded. Therefore, it may be possible to satisfy the current capacity of the bus bar 50 and minimize or reduce loss due to a resistance, and at the same time, to satisfy the welding quality at welding sites between the bus bar 50 and the first and second electrodes E1 and E2 of the battery cells 10.

For example, the thicknesses w₁ and w₂ of the first and second portions 50a1 and 50a2 may be 0.5 mm or less, and the thickness w₃ of the connection portion CP may be 0.8 mm or more. When the thicknesses w₁ and w₂ of the first and second portions 50a1 and 50a2 are 0.5 mm or less, the welding quality may be secured during laser welding. When the thicknesses w₁ and w₂ of the first and second portions 50a1 and 50a2 exceed 0.5 mm, it may be difficult to ensure the welding quality.

Also, when the thicknesses w₁ and w₂ of the first and second portions 50a1 and 50a2 are 0.5 mm or less, and the thickness w₃ of the connection portion CP is less than 0.8 mm, the electrical connection between the battery cells 10 might not satisfy a reference value of the battery pack 1 due to insufficient current capacity.

The battery pack according to one or more embodiments of the present disclosure may prevent or substantially prevent leakage of a coolant, and may secure heat dissipation performance by including the structure in which the cooling piece containing the insulating fluid is located between the battery cells.

The battery pack according to one or more embodiments of the present disclosure may be easily connected to a chiller of a vehicle, on which the battery pack is to be mounted, by including the first and second heat conductive surfaces formed by bending both ends (e.g., opposite ends) of the cooling piece.

The battery pack according to one or more embodiments of the present disclosure may minimize or reduce energy density loss by including the structure in which the mounting portions and the first and second terminals are arranged in spaces between the battery cells.

The battery pack according to one or more embodiments of the present disclosure may increase the allowable current capacity and minimize or reduce loss due to a resistance by including the bus bar.

The battery pack according to one or more embodiments of the present disclosure may improve the welding quality of the bus bar by having different thicknesses for different regions of the bus bar.

The battery pack according to one or more embodiments of the present disclosure may facilitate a gas discharge, even if an ignition event occurs in the battery pack, by including the structure of the venting portion formed on the lower surface of the battery pack.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims.

## Claims

1. A battery pack comprising:
a plurality of battery cells in a plurality of columns, the battery cells in each of the columns being located along a column direction, and the battery cells in the columns adjacent to each other being located along a zigzag pattern in a row direction while alternately shifted forward and rearward in the column direction;
a plurality of cooling pieces, each of the cooling pieces being located between the battery cells in the columns adjacent to each other, and extending in a meander shape along an outer circumference of the battery cells in the columns adjacent to each other; and
a bus bar on a terminal surface of the battery cells to electrically connect the battery cells to each other in rows adjacent to each other, the terminal surface being a surface on which different first and second electrodes are exposed.

2. The battery pack as claimed in claim 1, wherein extra spaces are located at a position behind the battery cells in a column shifted forward, and at a position in front of the battery cells in a column shifted rearward from among the battery cells in the columns adjacent to each other, and
wherein at least one of the extra spaces provides a location for a mounting portion of first and second holders configured to accommodate the plurality of battery cells, or first and second terminals configured to draw electrical outputs of the plurality of battery cells.

3. The battery pack as claimed in claim 1 or 2, wherein each of the cooling pieces comprises first and second heat conductive surfaces at opposite ends, respectively, that are bent in a direction crossing the column direction outside the plurality of battery cells.

4. The battery pack as claimed in claim 1, 2, or 3, wherein the bus bar comprises:
first portions connected to the first electrodes of the battery cells of a first group;
second portions connected to the second electrodes of the battery cells of a second group adjacent to the first group in the row direction; and
connection portions connecting the first and second portions to each other.

5. The battery pack as claimed in claim 4, wherein the bus bar comprises a plurality of bus bar units, and
the plurality of bus bar units are located in a zigzag pattern along the row direction.

6. The battery pack as claimed in claim 4 or 5, wherein a thickness of at least one of the first portions, the second portions, or the connection portions is different from thicknesses of the others.

7. The battery pack as claimed in claim 6, wherein the thicknesses of the first and second portions are less than the thickness of the connection portions.

8. The battery pack as claimed in claim 7, wherein the first portions are welded and coupled to the first electrodes of the battery cells of the first group, and the second portions are welded and coupled to the second electrodes of the battery cells of the second group.

9. The battery pack as claimed in claim 7 or 8, wherein the thicknesses of each of the first and second portions is 0.5 mm or less, and the thickness of the connection portions is 0.8 mm or more.

10. The battery pack as claimed in any one of claims 1 to 9, further comprising a venting portion on a bottom surface of the battery pack, the venting portion having a pillar structure protruding in a vertical direction from a lower surface of the battery cells.

11. The battery pack as claimed in any one of claims 1 to 10, wherein the cooling pieces are configured to accommodate an insulating fluid therein.

12. The battery pack as claimed in any one of claims 1 to 11, further comprising first and second holders configured to accommodate the plurality of battery cells.

13. The battery pack as claimed in claim 12, wherein the first and second holders comprise a plurality of hooks on outer surfaces thereof.

14. The battery pack as claimed in any one of claims 1 to 13, wherein the battery cells are cylindrical.
